# EUROPEAN PATENT APPLICATION

(11) **EP 4 586 644 A1**
(43) Date of publication of application: **16.07.2025**
(21) Application number: 24824934.4
(22) Date of filing: 14.03.2024
(51) Int. Cl.: H04R 9/06

(54) **ELECTRONIC DEVICE**

(30) Priority: 19.06.2023 CN 202310727638
(71) Applicant: Honor Device Co., Ltd., Shenzhen, Guangdong 518040 (CN)
(72) Inventor: WU, Jiang, Shenzhen, Guangdong 518040 (CN); SUN, Lijing, Shenzhen, Guangdong 518040 (CN)
(74) Representative: Gill Jennings & Every LLP
(86) International application number: PCT/CN2024/081652
(87) International publication number: WO 2024/260032

(57) **Abstract**

Embodiments of this application provide an electronic device. A display has a local groove structure. A location of the local groove structure corresponds to a location of a front cavity sound outlet channel. The local groove structure is configured to increase a cross-sectional area of the front cavity sound outlet channel. The front cavity sound outlet channel is configured to output a sound emitted by a speaker assembly. The front cavity sound outlet channel is configured to output the sound emitted by the speaker assembly to the outside of the electronic device. If a length and a width of the front cavity sound outlet channel are already defined, a thickness of the front cavity sound outlet channel is a most crucial factor affecting an airflow velocity. As the thickness increases, the airflow velocity decreases, and correspondingly, airflow noise caused by the airflow velocity is smaller. In the embodiments of this application, there is the local groove structure at the location that is on the display and that corresponds to the front cavity sound outlet channel, so that the thickness of the front cavity sound outlet channel is increased, that is, the cross-sectional area of the front cavity sound outlet channel is increased, thereby reducing the airflow velocity, reducing the airflow noise, and improving audio performance of the electronic device.

## Description

This application claims priority to Chinese Patent Application No. 202310727638.4, filed with the China National Intellectual Property Administration on June 19, 2023 and entitled "ELECTRONIC DEVICE", which is incorporated herein by reference in its entirety.

### TECHNICAL FIELD

This application relates to the field of terminal design and manufacturing technologies, and in particular, to an electronic device.

### BACKGROUND

With the development of electronic technologies, electronic devices such as a mobile phone and a pad are gradually developed to be lighter and thinner. Reduction in a thickness of an entire device leads to reduction in a thickness of an audio device, and reduction in a cross-sectional area of a sound outlet channel of the audio device. If a length of the sound outlet channel is fixed, a thickness and a width of the sound outlet channel are primary factors limiting audio performance. Therefore, how to make full use of a space of the entire device is a key point to improve audio performance.

### SUMMARY

An objective of embodiments of this application is to provide an electronic device, to improve audio performance of the electronic device. Specific technical solutions are as follows.

An embodiment of this application provides an electronic device, including:
a display, a front cavity sound outlet channel, and a speaker assembly.

The display has a local groove structure, a location of the local groove structure corresponds to a location of the front cavity sound outlet channel, and the local groove structure is configured to increase a cross-sectional area of the front cavity sound outlet channel.

The front cavity sound outlet channel is configured to output a sound emitted by the speaker assembly.

In a possible implementation, the display includes a protection layer region, a functional layer region, and a non-functional layer region; and the local groove structure is disposed at a location that is in the non-functional layer region and that corresponds to the front cavity sound outlet channel.

In a possible implementation, the non-functional layer region includes a buffer layer and a heat dissipation layer, and the local groove structure is obtained by cutting the buffer layer and/or the heat dissipation layer.

In a possible implementation, the electronic device further includes:
a middle bezel, a battery cover/an inner display, and a rear cavity.

The front cavity sound outlet channel is a cavity structure between the speaker assembly and the display, and the rear cavity is a cavity structure between the speaker assembly and the battery cover/the inner display.

There is a sound outlet slot between the middle bezel and the display, the sound outlet slot is in communication with the front cavity sound outlet channel, the middle bezel is connected to the speaker assembly, and the middle bezel is further connected to the battery cover/the inner display.

In a possible implementation, the speaker assembly includes a speaker core and a speaker cavity wall, and the speaker core is disposed in the speaker cavity wall.

In a possible implementation, the electronic device further includes:
a middle bezel, a battery cover/an inner display, and a rear cavity.

The speaker cavity wall is connected to the middle bezel.

The speaker cavity wall includes a front cavity wall and a rear cavity wall, there is a gap between the front cavity wall and the display, and there is a gap between the rear cavity wall and the battery cover/the inner display.

The front cavity sound outlet channel is a cavity structure between the speaker core and the front cavity wall, and the rear cavity is a cavity structure between the speaker core and the rear cavity wall.

There is a sound outlet slot between the middle bezel and the display, and the sound outlet slot is in communication with the front cavity sound outlet channel.

In a possible implementation, the front cavity wall has a first local convex groove structure, and the first local convex groove structure fits with the local groove structure to increase the cross-sectional area of the front cavity sound outlet channel.

In a possible implementation, the electronic device further includes:
a middle bezel, a battery cover/an inner display, and a rear cavity.

The speaker cavity wall is connected to the middle bezel.

The speaker cavity wall includes a front cavity wall and a rear cavity wall, there is a gap between the front cavity wall and the battery cover/the inner display, and there is a gap between the rear cavity wall and the display.

The front cavity sound outlet channel is a cavity structure between the speaker core and the front cavity wall, and the rear cavity is a cavity structure between the speaker core and the rear cavity wall.

There is a sound outlet slot between the middle bezel and the display, and the sound outlet slot is in communication with the front cavity sound outlet channel.

In a possible implementation, the rear cavity wall has a second local convex groove structure, and the second local convex groove structure fits with the local groove structure to increase the cross-sectional area of the front cavity sound outlet channel.

In a possible implementation, the electronic device further includes:
a speaker dustproof sealing assembly.

The speaker dustproof sealing assembly is disposed in the sound outlet slot or the front cavity sound outlet channel.

In a possible implementation, a thickness of the local groove structure is not less than 0.2 mm.

The embodiments of this application have the following beneficial effects:

The electronic device provided in the embodiments of this application includes the display, the front cavity sound outlet channel, and the speaker assembly. The display has the local groove structure. The location of the local groove structure corresponds to the location of the front cavity sound outlet channel. The local groove structure is configured to increase the cross-sectional area of the front cavity sound outlet channel. The front cavity sound outlet channel is configured to output the sound emitted by the speaker assembly. The front cavity sound outlet channel is configured to output the sound emitted by the speaker assembly to the outside of the electronic device. If a length and a width of the front cavity sound outlet channel are already defined, a thickness of the front cavity sound outlet channel (that is, a thickness direction of the electronic device) is a most critical factor affecting an airflow velocity. As the thickness increases, the airflow velocity decreases, and correspondingly, airflow noise caused by the airflow velocity is smaller. In the embodiments of this application, there is the local groove structure at the location that is on the display and that corresponds to the front cavity sound outlet channel, so that the thickness of the front cavity sound outlet channel is increased, that is, the cross-sectional area of the front cavity sound outlet channel is increased, by using the local groove structure, thereby reducing the airflow velocity, reducing the airflow noise, and improving audio performance of the electronic device.

### BRIEF DESCRIPTION OF DRAWINGS

The accompanying drawings described herein are used for providing a further understanding of this application, and constitute a part of this application. Example embodiments of this application and descriptions thereof are used for explaining this application, but do not constitute any inappropriate limitation on this application.
FIG. 1 is a schematic diagram of a mobile phone in a related technology;
FIG. 2 is a schematic diagram of a structure of a display of an electronic device according to an embodiment of this application;
FIG. 3 is a schematic diagram of a partial structure of a first electronic device according to an embodiment of this application;
FIG. 4 is a schematic diagram of a partial structure of a second electronic device according to an embodiment of this application;
FIG. 5 is a schematic diagram of a partial structure of a third electronic device according to an embodiment of this application;
FIG. 6 is a schematic diagram of a partial structure of a fourth electronic device according to an embodiment of this application;
FIG. 7 is a schematic diagram of a partial structure of a fifth electronic device according to an embodiment of this application;
FIG. 8 is a schematic diagram of a partial structure of a sixth electronic device according to an embodiment of this application;
FIG. 9 is a schematic diagram of an airflow velocity distribution in a front cavity sound outlet channel in an existing mobile phone structure; and
FIG. 10 is a schematic diagram of an airflow velocity distribution in a front cavity sound outlet channel in a mobile phone structure according to an embodiment of this application.

Descriptions of reference numerals:
display 21; front cavity sound outlet channel 22; speaker assembly 23; middle bezel 24; battery cover 25; rear cavity 26; sound outlet slot 27; speaker cavity wall 28; inner display 29; speaker core 31; protection layer region 211; functional layer region 212; non-functional layer region 213; local groove structure 2131; front cavity wall 281 and rear cavity wall 282; first local convex groove structure 2811; and second local convex groove structure 2821.

### DESCRIPTION OF EMBODIMENTS

To make the objectives, technical solutions, and advantages of the present invention clearer and more comprehensible, the following further describes the present invention with reference to the accompanying drawings and embodiments. It is clear that the described embodiments are merely some rather than all of embodiments of the present invention. All other embodiments obtained by a person of ordinary skill in the art based on embodiments of the present invention shall fall within the protection scope of the present invention.

To clearly describe the technical solutions in the embodiments of this application, in the embodiments of this application, words such as "first" and "second" are used to distinguish between same items or similar items with basically the same functions and effects. For example, a first instruction and a second instruction are intended to distinguish between different user instructions, but not to limit a sequential order thereof. A person skilled in the art may understand that the words such as "first" and "second" do not limit a quantity or an execution sequence, and the words such as "first" and "second" do not define a definite difference.

It should be noted that in this application, words such as "example" or "for example" are used to indicate an example, an illustration, or a description. Any embodiment or design solution described as "example" or "for example" in this application should not be construed as being preferred or advantageous over other embodiments or design solutions. Exactly, use of the words such as "example" or "for example" is intended to present a related concept in a specific manner.

Moreover, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, "at least one of a, b, and c" may indicate a, b, c, a and b, a and c, b and c, or a, b, and c, where a, b, and c may be singular or plural.

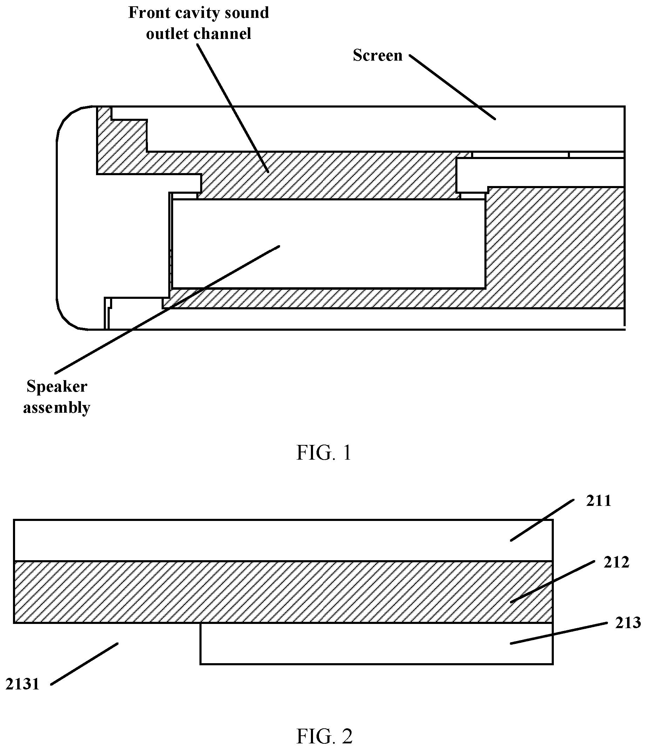

With the development of electronic technologies, electronic devices such as a mobile phone and a pad are gradually developed to be lighter and thinner. Reduction in a thickness of an entire device leads to reduction in a thickness of an audio device, and reduction in a cross-sectional area space of a sound outlet channel of the audio device. If a length of the sound outlet channel is fixed, a thickness and a width of the sound outlet channel are primary factors limiting audio performance. A mobile phone is used as an example. A mobile phone in a related technology is shown in FIG. 1. There is a front cavity sound outlet channel between a screen and a speaker assembly. If a length of the front cavity sound outlet channel is fixed, a thickness and a width of the front cavity sound outlet channel directly affect an airflow velocity. As the airflow velocity increases, noise caused by air flow is larger. Therefore, on the premise of ensuring lightening and thinning of an electronic device, how to make full use of a thickness space of the entire device to improve audio performance becomes a problem to be resolved urgently.

In view of this, an embodiment of this application provides an electronic device, including:
a display, a front cavity sound outlet channel, and a speaker assembly.

The display has a local groove structure, a location of the local groove structure corresponds to a location of the front cavity sound outlet channel, and the local groove structure is configured to increase a cross-sectional area of the front cavity sound outlet channel.

The front cavity sound outlet channel is configured to output a sound emitted by the speaker assembly.

The electronic device in this embodiment of this application may be a mobile phone, a pad, or the like. The front cavity sound outlet channel is configured to output the sound emitted by the speaker assembly to the outside of the electronic device. If a length and a width of the front cavity sound outlet channel are already defined, a thickness of the front cavity sound outlet channel (that is, a thickness direction of the electronic device) is a most critical factor affecting an airflow velocity. As the thickness increases, the airflow velocity decreases, and correspondingly, airflow noise caused by the airflow velocity is smaller. In this embodiment of this application, there is the local groove structure at the location that is on the display and that corresponds to the front cavity sound outlet channel, so that the thickness of the front cavity sound outlet channel is increased, that is, the cross-sectional area of the front cavity sound outlet channel is increased, by using the local groove structure, thereby reducing the airflow velocity, reducing the airflow noise, and improving audio performance of the electronic device.

The display usually includes a protection layer region, a functional layer region, and a non-functional layer region. The protection layer region may include a glass package layer. The functional layer region includes functional layers configured to support touch and display, for example, an anode layer, a cathode layer, and an electroluminescent layer. The non-functional layer region may include a buffer layer, a heat dissipation layer, and the like. Usually, a thickness of the functional layer region is difficult to change. After the protection layer region is thinned, strength decreases correspondingly, thus affecting a service life of the display. Therefore, in a possible manner, referring to FIG. 2, the display includes a protection layer region 211, a functional layer region 212, and a non-functional layer region 213. The local groove structure 2131 is disposed at a location that is in the non-functional layer region 213 and that corresponds to the front cavity sound outlet channel. The local groove structure 2131 is disposed in the non-functional layer region 213, which has less impact on the functional layer region 212 and the protection layer region 211, and has virtually no impact on the service life of the display.

The non-functional layer region 213 may include the buffer layer, the heat dissipation layer, and the like. In some examples, the buffer layer and the heat dissipation layer may alternatively be combined into one layer, that is, a heat dissipation buffer layer. It can be understood that, in this embodiment of this application, the local groove structure 2131 is disposed at the location that is in the non-functional layer region 213 and that corresponds to the front cavity sound outlet channel, instead of removing the non-functional layer region 213. In a possible implementation, that the non-functional layer region 213 includes a buffer layer and a heat dissipation layer is used as an example, and the local groove structure 2131 is obtained by cutting the buffer layer and/or the heat dissipation layer. The local groove structure 2131 may be obtained by cutting the buffer layer and/or the heat dissipation layer. A cutting thickness may be specifically determined according to a thickness of the designed local groove structure 2131. It can be understood that the thickness of the local groove structure 2131 should not exceed a thickness of the non-functional layer region 213, or otherwise, the functional layer region 212 may be affected. In a possible implementation, a thickness of the local groove structure 2131 is not less than 0.2 mm. The thickness of the local groove structure 2131 is set to be more than 0.2 mm to effectively increase the cross-sectional area of the front cavity sound outlet channel, thereby reducing the airflow noise and improving audio performance of the electronic device. It can be understood that "not less than 0.2 mm" herein is merely an example. The thickness of the local groove structure 2131 may alternatively be less than 0.2 mm. Both of the foregoing cases fall within the protection scope of this application.

In a possible implementation, the speaker assembly includes a speaker core and a speaker cavity wall, and the speaker core is disposed in the speaker cavity wall.

The speaker assembly may include the speaker core and the speaker cavity wall. In some embodiments, the speaker assembly may further include a pickup core and the like. The speaker core may include a loudspeaker and a speaker circuit, which are used for sound production The speaker cavity wall is configured to protect the speaker core, and facilitate mounting of the loudspeaker and the speaker circuit. The speaker core is disposed in the speaker cavity wall. In an example, to reduce impact on vibration of the loudspeaker, the loudspeaker may be suspended and fastened by using at least three support points in the speaker cavity wall, to meet a vibration requirement of the loudspeaker in the speaker core.

The following specifically describes a structure of the electronic device provided in this embodiment of this application.

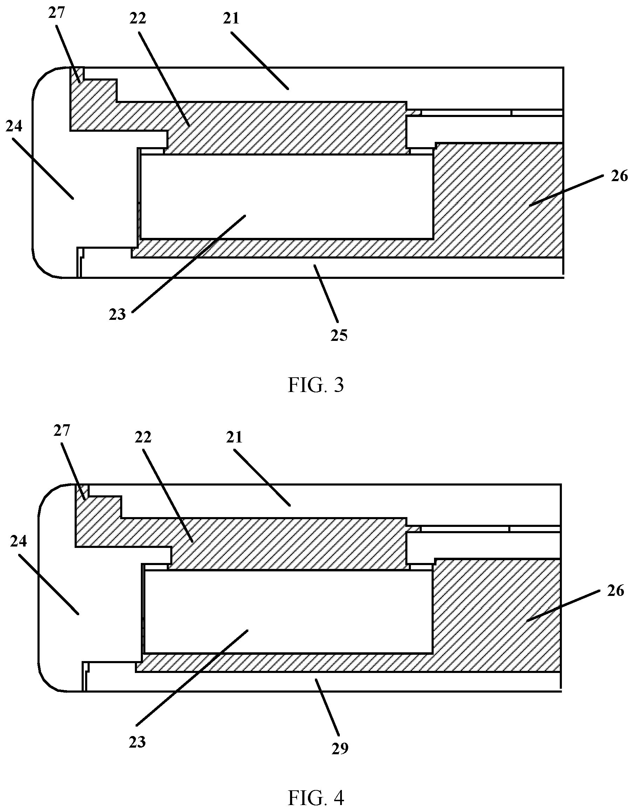

In an example, referring to FIG. 3, the electronic device includes:
a display 21, a front cavity sound outlet channel 22, a speaker assembly 23, a middle bezel 24, a battery cover 25, a rear cavity 26, and a sound outlet slot 27.

The display 21 has a local groove structure 2131, a location of the local groove structure 2131 corresponds to a location of the front cavity sound outlet channel 22, and the local groove structure 2131 is configured to increase a cross-sectional area of the front cavity sound outlet channel 22.

The front cavity sound outlet channel 22 is a cavity structure between the speaker assembly 23 and the display 21, and the rear cavity 26 is a cavity structure between the speaker assembly 23 and the battery cover 25.

There is the sound outlet slot 27 between the middle bezel 24 and the display 21, the sound outlet slot 27 is in communication with the front cavity sound outlet channel 22, the middle bezel 24 is connected to the speaker assembly 23, and the middle bezel 24 is further connected to the battery cover 25.

FIG. 3 is a schematic diagram of a partial structure of an electronic device. There is the sound outlet slot 27 between the middle bezel 24 and the display 21, and there is the front cavity sound outlet channel 22 between the speaker assembly 23 and the display 21. One end of the speaker assembly 23 is connected to the middle bezel 24, and the other end of the speaker assembly 23 may be connected to a cavity wall structure or a bracket structure, thereby implementing fastening of the speaker assembly 23. There is the rear cavity 26 between the speaker assembly 23 and the battery cover 25. The rear cavity 26 is configured to provide vibration balance when the speaker assembly 23 produces a sound, so that a service life of the speaker assembly 23 can be prolonged.

In an example, referring to FIG. 4, the electronic device includes:
a display 21, a front cavity sound outlet channel 22, a speaker assembly 23, a middle bezel 24, an inner display 29, a rear cavity 26, and a sound outlet slot 27.

The display 21 has a local groove structure 2131, a location of the local groove structure 2131 corresponds to a location of the front cavity sound outlet channel 22, and the local groove structure 2131 is configured to increase a cross-sectional area of the front cavity sound outlet channel 22.

The front cavity sound outlet channel 22 is a cavity structure between the speaker assembly 23 and the display 21, and the rear cavity 26 is a cavity structure between the speaker assembly 23 and the inner display 29.

There is the sound outlet slot 27 between the middle bezel 24 and the display 21, the sound outlet slot 27 is in communication with the front cavity sound outlet channel 22, the middle bezel 24 is connected to the speaker assembly 23, and the middle bezel 24 is further connected to the inner display 29.

FIG. 4 is a schematic diagram of a partial structure of an electronic device. There is the sound outlet slot 27 between the middle bezel 24 and the display 21, and there is the front cavity sound outlet channel 22 between the speaker assembly 23 and the display 21. One end of the speaker assembly 23 is connected to the middle bezel 24, and the other end of the speaker assembly 23 may be connected to a cavity wall structure or a bracket structure, thereby implementing fastening of the speaker assembly 23. There is the rear cavity 26 between the speaker assembly 23 and the inner display 29. The rear cavity 26 is configured to provide vibration balance when the speaker assembly 23 produces a sound, so that a service life of the speaker assembly 23 can be prolonged.

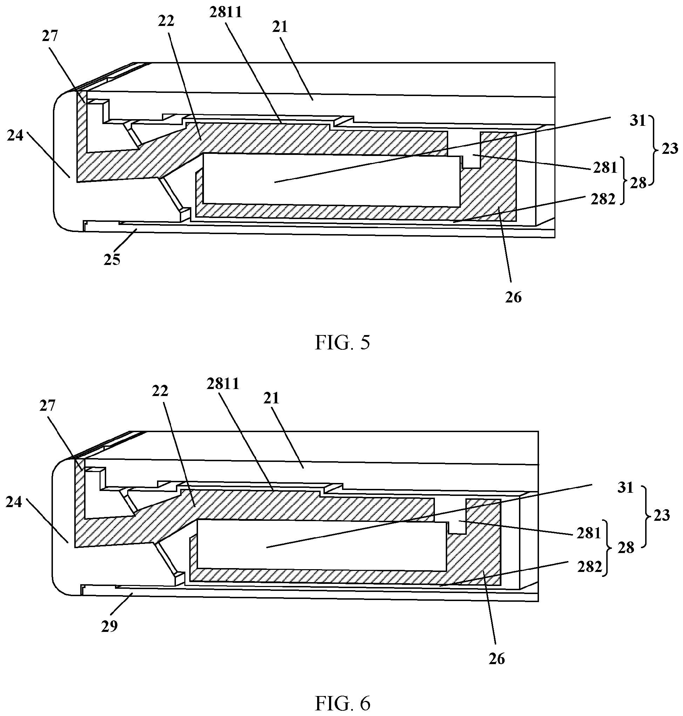

In an example, referring to FIG. 5, the electronic device includes:
a display 21, a front cavity sound outlet channel 22, a speaker assembly 23, a middle bezel 24, a battery cover 25, a rear cavity 26, and a sound outlet slot 27.

The speaker assembly 23 includes a speaker cavity wall 28 and a speaker core 31, and the speaker core 31 is disposed in the speaker cavity wall 28.

The display 21 has a local groove structure 2131, a location of the local groove structure 2131 corresponds to a location of the front cavity sound outlet channel 22, and the local groove structure 2131 is configured to increase a cross-sectional area of the front cavity sound outlet channel 22.

The speaker cavity wall 28 includes a front cavity wall 281 and a rear cavity wall 282, there is a gap between the front cavity wall 281 and the display 21, and there is a gap between the rear cavity wall 282 and the battery cover 25.

Connection between the speaker cavity wall 28 and the middle bezel 24 may be specifically connection between the rear cavity wall 282 and the middle bezel 24.

The front cavity sound outlet channel 22 is a cavity structure between the speaker assembly 23 and the front cavity wall 281, and the rear cavity 26 is a cavity structure between the speaker assembly 23 and the rear cavity wall 282.

There is the sound outlet slot 27 between the middle bezel 24 and the display 21, and the sound outlet slot 27 is in communication with the front cavity sound outlet channel 22.

FIG. 5 is a schematic diagram of a partial structure of still another electronic device. The speaker cavity wall 28 encloses the speaker core 31, there is the front cavity sound outlet channel 22 between the speaker core 31 and the front cavity wall 281, and there is the rear cavity 26 between the speaker core 31 and the rear cavity wall 282. There is the gap between the display 21 and the front cavity wall 281, and there is the gap between the rear cavity wall 282 and the battery cover 25. The speaker core 31 vibrates when producing a sound, and therefore may cause vibration of the speaker cavity wall 28. The foregoing two gaps may be used as buffer spaces for vibration to protect the display 21 and the battery cover 25. In an example, the front cavity wall 281 has a first local convex groove structure 2811, and the first local convex groove structure 2811 fits with the local groove structure 2131 to increase a thickness of the front cavity sound outlet channel 22, that is, increase the cross-sectional area of the front cavity sound outlet channel 22. In this embodiment of this application, the structure of the speaker cavity wall 28 is added to improve stability of the speaker assembly 23, and protect the speaker assembly 23.

**In** an example, referring to FIG. 6, the electronic device includes:
a display 21, a front cavity sound outlet channel 22, a speaker assembly 23, a middle bezel 24, an inner display 29, a rear cavity 26, and a sound outlet slot 27.

The speaker assembly 23 includes a speaker cavity wall 28 and a speaker core 31, and the speaker core 31 is disposed in the speaker cavity wall 28.

The display 21 has a local groove structure 2131, a location of the local groove structure 2131 corresponds to a location of the front cavity sound outlet channel 22, and the local groove structure 2131 is configured to increase a cross-sectional area of the front cavity sound outlet channel 22.

The speaker cavity wall 28 includes a front cavity wall 281 and a rear cavity wall 282, there is a gap between the front cavity wall 281 and the display 21, and there is a gap between the rear cavity wall 282 and the inner display 29.

Connection between the speaker cavity wall 28 and the middle bezel 24 may be specifically connection between the rear cavity wall 282 and the middle bezel 24.

The front cavity sound outlet channel 22 is a cavity structure between the speaker assembly 23 and the front cavity wall 281, and the rear cavity 26 is a cavity structure between the speaker assembly 23 and the rear cavity wall 282.

There is the sound outlet slot 27 between the middle bezel 24 and the display 21, and the sound outlet slot 27 is in communication with the front cavity sound outlet channel 22.

FIG. 6 is a schematic diagram of a partial structure of still another electronic device. The speaker cavity wall 28 encloses the speaker core 31, there is the front cavity sound outlet channel 22 between the speaker core 31 and the front cavity wall 281, and there is the rear cavity 26 between the speaker core 31 and the rear cavity wall 282. There is the gap between the display 21 and the front cavity wall 281, and there is the gap between the rear cavity wall 282 and the inner display 29. The speaker core 31 vibrates when producing a sound, and therefore may cause vibration of the speaker cavity wall 28. The foregoing two gaps may be used as buffer spaces for vibration to protect the display 21 and the inner display 29. In an example, the front cavity wall 281 has a first local convex groove structure 2811, and the first local convex groove structure 2811 fits with the local groove structure 2131 to increase a thickness of the front cavity sound outlet channel 22, that is, increase the cross-sectional area of the front cavity sound outlet channel 22. In this embodiment of this application, the structure of the speaker cavity wall 28 is added to improve stability of the speaker assembly 23, and protect the speaker assembly 23.

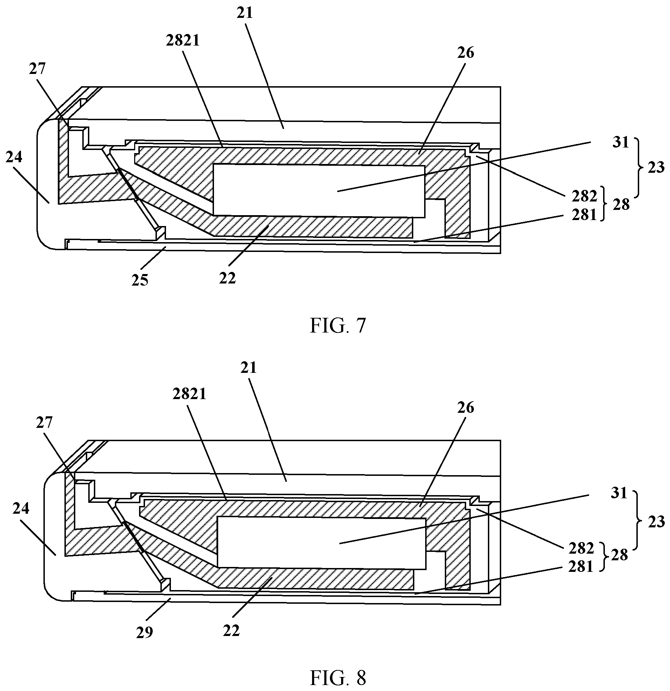

In an example, referring to FIG. 7, the electronic device includes:
a display 21, a front cavity sound outlet channel 22, a speaker assembly 23, a middle bezel 24, a battery cover 25, a rear cavity 26, and a sound outlet slot 27.

The speaker assembly 23 includes a speaker cavity wall 28 and a speaker core 31, and the speaker core 31 is disposed in the speaker cavity wall 28.

The display 21 has a local groove structure 2131, a location of the local groove structure 2131 corresponds to a location of the front cavity sound outlet channel 22, and the local groove structure 2131 is configured to increase a cross-sectional area of the front cavity sound outlet channel 22.

The speaker cavity wall 28 includes a front cavity wall 281 and a rear cavity wall 282, there is a gap between the front cavity wall 281 and the battery cover 25, and there is a gap between the rear cavity wall 282 and the display 21.

Connection between the speaker cavity wall 28 and the middle bezel 24 may be specifically connection between the front cavity wall 281 and the middle bezel 24.

The front cavity sound outlet channel 22 is a cavity structure between the speaker core 31 and the front cavity wall 281, and the rear cavity 26 is a cavity structure between the speaker core 31 and the rear cavity wall 282.

There is the sound outlet slot 27 between the middle bezel 24 and the display 21, and the sound outlet slot 27 is in communication with the front cavity sound outlet channel 22.

FIG. 7 is a schematic diagram of a partial structure of still another electronic device. One end of the speaker core 31 is connected to the front cavity wall 281, and the other end of the speaker core 31 is connected to the rear cavity wall 282. The speaker cavity wall 28 encloses the speaker core 31, there is the front cavity sound outlet channel 22 between the speaker core 31 and the front cavity wall 281, and there is the rear cavity 26 between the speaker core 31 and the rear cavity wall 282. There is the gap between the display 21 and the rear cavity wall 282, and there is the gap between the front cavity wall 281 and the battery cover 25. The speaker core 31 vibrates when producing a sound, and therefore may cause vibration of the speaker cavity wall 28. The foregoing two gaps may be used as buffer spaces for vibration to protect the display 21 and the battery cover 25. In an example, the rear cavity wall 282 has a second local convex groove structure 2821, and the second local convex groove structure 2821 fits with the local groove structure 2131 to increase a thickness of the front cavity sound outlet channel 22, that is, increase the cross-sectional area of the front cavity sound outlet channel 22. In this embodiment of this application, the structure of the speaker cavity wall 28 is added to improve stability of the speaker assembly 23, and protect the speaker assembly 23.

In an example, referring to FIG. 8, the electronic device includes:
a display 21, a front cavity sound outlet channel 22, a speaker assembly 23, a middle bezel 24, an inner display 29, a rear cavity 26, and a sound outlet slot 27.

The speaker assembly 23 includes a speaker cavity wall 28 and a speaker core 31, and the speaker core 31 is disposed in the speaker cavity wall 28.

The display 21 has a local groove structure 2131, a location of the local groove structure 2131 corresponds to a location of the front cavity sound outlet channel 22, and the local groove structure 2131 is configured to increase a cross-sectional area of the front cavity sound outlet channel 22.

The speaker cavity wall 28 includes a front cavity wall 281 and a rear cavity wall 282, there is a gap between the front cavity wall 281 and the inner display 29, and there is a gap between the rear cavity wall 282 and the display 21.

Connection between the speaker cavity wall 28 and the middle bezel 24 may be specifically connection between the front cavity wall 281 and the middle bezel 24.

The front cavity sound outlet channel 22 is a cavity structure between the speaker core 31 and the front cavity wall 281, and the rear cavity 26 is a cavity structure between the speaker core 31 and the rear cavity wall 282.

There is the sound outlet slot 27 between the middle bezel 24 and the display 21, and the sound outlet slot 27 is in communication with the front cavity sound outlet channel 22.

FIG. 8 is a schematic diagram of a partial structure of still another electronic device. One end of the speaker core 31 is connected to the front cavity wall 281, and the other end of the speaker core 31 is connected to the rear cavity wall 282. The speaker cavity wall 28 encloses the speaker core 31, there is the front cavity sound outlet channel 22 between the speaker core 31 and the front cavity wall 281, and there is the rear cavity 26 between the speaker core 31 and the rear cavity wall 282. There is the gap between the display 21 and the rear cavity wall 282, and there is the gap between the front cavity wall 281 and the inner display 29. The speaker core 31 vibrates when producing a sound, and therefore may cause vibration of the speaker cavity wall 28. The foregoing two gaps may be used as buffer spaces for vibration to protect the display 21 and the inner display 29. In an example, the rear cavity wall 282 has a second local convex groove structure 2821, and the second local convex groove structure 2821 fits with the local groove structure 2131 to increase a thickness of the front cavity sound outlet channel 22, that is, increase the cross-sectional area of the front cavity sound outlet channel 22. In this embodiment of this application, the structure of the speaker cavity wall 28 is added to improve stability of the speaker assembly 23, and protect the speaker assembly 23.

To reduce dust entering the speaker assembly 23, in a possible implementation, the electronic device further includes a speaker dustproof sealing assembly. The speaker dustproof sealing assembly is disposed in the sound outlet slot 27 or the front cavity sound outlet channel 22. In an example, the speaker dustproof sealing assembly may be disposed in the front cavity sound outlet channel 22 because the sound outlet slot 27 is narrow and small. In this embodiment of this application, the electronic device further includes the speaker dustproof sealing assembly, thereby reducing dust entering the speaker assembly 23, and prolonging the service life of the speaker assembly 23.

It can be understood that the electronic device in the embodiments of this application may be a foldable-display device or a non-foldable-display device. For a folding structure of a foldable display, refer to related foldable display technologies. This is not specifically limited in this application.

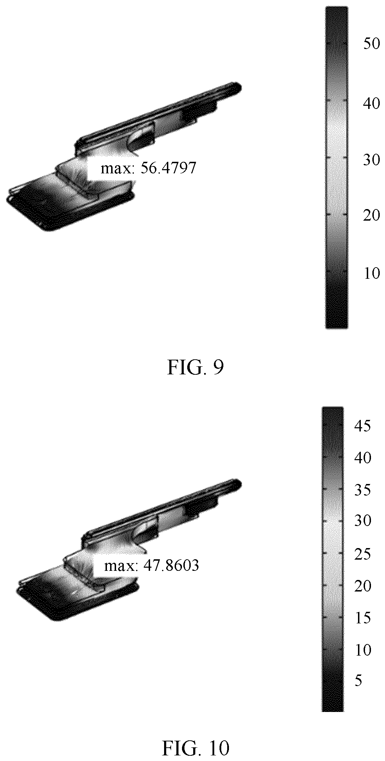

To more clearly describe that the electronic device in the embodiments of this application can improve audio performance, that the electronic device is a mobile phone is used as an example. Referring to FIG. 9 and FIG. 10, FIG. 9 is a schematic diagram of an airflow velocity distribution in the front cavity sound outlet channel in the mobile phone structure shown in FIG. 1, where an airflow velocity at a maximum airflow velocity location is 56.4797 m/s; and FIG. 10 is a schematic diagram of an airflow velocity distribution in a front cavity sound outlet channel when a local groove structure of an electronic device according to an embodiment of this application is 0.2 mm, where an airflow velocity at a maximum airflow velocity location is 47.8603 m/s. It can be learned that the electronic device in the embodiments of this application can reduce a maximum airflow velocity by about 20% by increasing the thickness of the front cavity sound outlet channel, thereby effectively reducing airflow noise.

It can be understood that FIG. 3 to FIG. 8 merely show structural parts related to the front cavity sound outlet channel. For structures of other parts of the electronic device, refer to the related technologies. This is not specifically limited in this application.

In the accompanying drawings, some structure or method features may be shown in a particular arrangement and/or order. However, it should be understood that such particular arrangement and/or sorting may not be required. Instead, in some embodiments, these features may be arranged in a manner and/or order different from that shown in the accompanying drawings of the specification. In addition, inclusion of the structure or method features in a particular figure does not imply that all embodiments need to include the features. In some embodiments, these features may not be included, or these features may be combined with other features.

It should be noted that all the units/modules mentioned in the device embodiments of this application are logical units/modules. Physically, a logical unit/module may be a physical unit/module, or may be a part of a physical unit/module, or may be implemented as a combination of a plurality of physical units/modules. Physical implementations of these logical units/modules are not most important, and only a combination of functions implemented by these logical units/modules is a key to resolving the technical problem proposed in this application. In addition, to highlight the innovative part of this application, in the foregoing device embodiments of this application, units/modules that are not closely related to resolving the technical problem proposed in this application are not introduced. This does not mean that no other units/modules exist in the foregoing device embodiments.

It should be noted that in the examples and specification of this patent, relational terms such as first and second are only used to distinguish one entity or operation from another entity or operation, and do not necessarily require or imply that there is any such actual relationship or order between these entities or operations. In addition, the term "include", "comprise", or any other variant thereof is intended to cover non-exclusive inclusion, so that a process, method, article, or device that includes a series of elements includes not only those elements but also other elements that are not expressly listed, or includes elements inherent to such a process, method, article, or device. Without further limitation, the element defined by the sentence "including a" does not exclude that other identical elements also exist in the process, method, article, or device including the element.

Although this application has been illustrated or described with reference to some preferred embodiments of this application, a person of ordinary skill in the art should understand that various modifications may be made to forms and details without departing from the spirit and scope of this application.

## Claims

1. An electronic device, comprising:
a display, a front cavity sound outlet channel, and a speaker assembly, wherein
the display has a local groove structure, a location of the local groove structure corresponds to a location of the front cavity sound outlet channel, and the local groove structure is configured to increase a cross-sectional area of the front cavity sound outlet channel; and
the front cavity sound outlet channel is configured to output a sound emitted by the speaker assembly.

2. The electronic device according to claim 1, wherein the display comprises a protection layer region, a functional layer region, and a non-functional layer region; and the local groove structure is disposed at a location that is in the non-functional layer region and that corresponds to the front cavity sound outlet channel.

3. The electronic device according to claim 2, wherein the non-functional layer region comprises a buffer layer and a heat dissipation layer, and the local groove structure is obtained by cutting the buffer layer and/or the heat dissipation layer.

4. The electronic device according to claim 1, wherein the electronic device further comprises:
a middle bezel, a battery cover/an inner display, and a rear cavity;
the front cavity sound outlet channel is a cavity structure between the speaker assembly and the display, and the rear cavity is a cavity structure between the speaker assembly and the battery cover/the inner display; and
there is a sound outlet slot between the middle bezel and the display, the sound outlet slot is in communication with the front cavity sound outlet channel, the middle bezel is connected to the speaker assembly, and the middle bezel is further connected to the battery cover/the inner display.

5. The electronic device according to claim 1, wherein the speaker assembly comprises a speaker core and a speaker cavity wall, and the speaker core is disposed in the speaker cavity wall.

6. The electronic device according to claim 5, wherein the electronic device further comprises:
a middle bezel, a battery cover/an inner display, and a rear cavity;
the speaker cavity wall is connected to the middle bezel;
the speaker cavity wall comprises a front cavity wall and a rear cavity wall, there is a gap between the front cavity wall and the display, and there is a gap between the rear cavity wall and the battery cover/the inner display;
the front cavity sound outlet channel is a cavity structure between the speaker core and the front cavity wall, and the rear cavity is a cavity structure between the speaker core and the rear cavity wall; and
there is a sound outlet slot between the middle bezel and the display, and the sound outlet slot is in communication with the front cavity sound outlet channel.

7. The electronic device according to claim 6, wherein the front cavity wall has a first local convex groove structure, and the first local convex groove structure fits with the local groove structure to increase the cross-sectional area of the front cavity sound outlet channel.

8. The electronic device according to claim 5, wherein the electronic device further comprises:
a middle bezel, a battery cover/an inner display, and a rear cavity;
the speaker cavity wall is connected to the middle bezel;
the speaker cavity wall comprises a front cavity wall and a rear cavity wall, there is a gap between the front cavity wall and the battery cover/the inner display, and there is a gap between the rear cavity wall and the display;
the front cavity sound outlet channel is a cavity structure between the speaker core and the front cavity wall, and the rear cavity is a cavity structure between the speaker core and the rear cavity wall; and
there is a sound outlet slot between the middle bezel and the display, and the sound outlet slot is in communication with the front cavity sound outlet channel.

9. The electronic device according to claim 8, wherein the rear cavity wall has a second local convex groove structure, and the second local convex groove structure fits with the local groove structure to increase the cross-sectional area of the front cavity sound outlet channel.

10. The electronic device according to any one of claims 6-9, wherein the electronic device further comprises:
a speaker dustproof sealing assembly; and
the speaker dustproof sealing assembly is disposed in the sound outlet slot or the front cavity sound outlet channel.

11. The electronic device according to claim 1, wherein a thickness of the local groove structure is not less than 0.2 mm.
